# EUROPEAN PATENT APPLICATION

(11) **EP 1 179 797 A1**
(43) Date of publication of application: **13.02.2002**
(21) Application number: 01306661.8
(22) Date of filing: 03.08.2001
(51) Int. Cl.: G06F 17/60

(54) **Apparatus and method for facilitating ordering and supply**

(30) Priority: 03.08.2000 SG 200004130
(71) Applicant: Chow, Hoo Siong, Singapore 788859 (SG)
(72) Inventor: Chow, Hoo Siong, Singapore 788859 (SG)
(74) Representative: Alexander, Thomas Bruce

(57) **Abstract**

A method and apparatus for ordering and facilitating the collection of items such as food items. A set of user terminals 12 may be distributed around a building, each user terminal 12 being connected to a central server 10. The central server 10 is also connected to one or more operator terminals 14 located in the building canteen. A user may order the food at the user terminal 12 by perusing a menu and making selections. The user also inserts a smart card which serves to identify the user as an account holder in the central server 10 database. After making selections, the information is stored in the central server 10 and is collated so that the food items selected by all the users requiring food from the canteen are known by the central server 10 before some defined cut-off point in time. The collated order is then sent by the central server 10 to the operator terminals 14 so that an appropriate number of each ordered food item can be prepared. To collect the food, the user simply inserts his smart card into an operator terminal 14 and his order is displayed. Preferably, the smart card is also used to transact payment of the food and the central server 10 may be connectable to the internet 22 so as to allow remote ordering by users and to allow the central server 10 to order raw materials from suppliers in accordance with how much raw material has been actually used.

## Description

### Field of the Invention

The present invention relates, generally, to automated order/supply/payment systems and more especially to an apparatus and method which allows a customer to order desired items from a menu of available items and which allows a vendor to more exactly meet demand with less wastage. The invention is applicable, inter alias in the order, supply and payment for food in a canteen or cafeteria environment.

### Background to the Invention

A variety of systems for the automated or semi-automated ordering/payment of goods are known. These include systems providing a vender with automatic monitoring and replenishment of stock, and systems which allow a user to make an order automatically using, for instance a credit card.

An example of an area in which such systems have been introduced is the ordering and payment for food in the food service industry, such as in a canteen or cafeteria. Many organisations such as educational institutions, businesses and the like have a canteen at their premises for the use of their students, employees etc. Traditionally, the canteen operators prepare the day's food based on their estimate of the day's demand for each food type. This estimate is based on experience and a large amount of guesswork. Therefore, the canteen operator's estimates often fall short of demand, leading to customers going hungry, or exceed demand, leading to wastage of food.

Sometimes, a single canteen may consist of a plurality of operators, each having a substantially independent stall in the canteen area. In such cases, it is usual for each operator to make their own arrangements for the order of raw materials and foodstuffs on the basis of each operator's own estimate of demand. This process can duplicate a significant amount of time and effort.

In other canteens food is made to order. This has the advantage that there is less wastage because there is no need to prepare food beforehand based on some estimate of demand. However, time is spent taking and preparing a customer's order which contributes to longer waiting times for all customers. If waiting times are to be reduced, a larger number of staff is required, increasing running costs.

A problem shared by both of the above examples is that paying for the food can take time, especially if a credit or debit card is used, and the payment is a potential source of contamination if the person preparing or serving the food is required to handle currency or other potential sources of contamination such as receipts.

It may further be desirable or necessary to keep track of the type, quantity and/or nutritional value of the food intake of particular consumers. For example, parents may like to monitor the diet that their child keeps in a school so that they may take appropriate steps if they believe the diet is inappropriate. Other examples of such particular consumers include personnel in the military and customers at weight reduction centres. It has traditionally been very difficult to track the diet of an individual and known methods, often require asking each consumer manually to fill in a questionnaire each day. The use of questionnaires is time consuming and further is vulnerable to false answers being given. Furthermore, it may be desirable to not only monitor the diet of an individual but also to predetermine it. This desire is particularly applicable to a school canteen environment, where parents may wish to control the nature and quantity of food being consumed by their children at the canteen. This control has been traditionally exercised, if at all, by a visit of the parent to the canteen operator to give a set of instructions. This method has the disadvantage that a large amount of the parent's, and canteen operator's time is taken and further in that it imposes a burden on the canteen operator to make special provisions for different identified children.

US 5,573,082 discloses a manual food service system which uses an order entry and payment system physically separate from the area in which food is prepared. A customer is required to visit the order entry and payment system and choose one or more food items. Optionally, the customer may pay for the food items at this ordering stage using a credit card or cash. The order entry and payment system issues the customer with a receipt and causes a second ticket to be printed in the food preparation area. Servers in the food preparation area are then able to prepare the order remote from the customer. The customer then takes his receipt to the food preparation area and collects his food.

This system has the disadvantage that the customer is required to retain a receipt to prove he has purchased some food. If the customer loses or defaces the receipt, it is possible that he will not be able to prove that the food prepared belongs to him. Further, the food server is required to handle the receipt which might be a source of biological contamination. Also, there is no mechanism for monitoring the diet of individuals since the individuals are not identified at the order entry and payment system.

### Summary of the Invention

The present invention provides an ordering and collection facilitation system comprising:
a database storing information including an identification of each of a plurality of items available for order and a value corresponding to a respective order therefore;
a plurality of portable data storage media;
at least one user terminal including a viewer for viewing a menu of said items available for order, a selector for selecting at least one of said items to produce selection information, a reader for reading one of said portable data storage media and a data associator for associating the selection information with data read from said portable data storage medium;
a database updator for updating the database with the selection information from said at least one user terminal associated with said data read from the data storage medium, so as to accumulate the selected quantity of each of said items and to store the accumulated quantity in said database;
a display for displaying the accumulated quantity; and
a display operable upon reading data from one of the portable data storage media to display the selection information associated therewith.

Preferably the items are food items and the apparatus is for use in the canteen environment.

Also preferably, the display for displaying the accumulated required quantity is the same as the display for displaying the selection. It is also possible that the viewer in the user terminal is the same as the above mentioned single display.

The display is preferably located on an operator terminal which has a reader for reading one of the data storage media.

Further, the database may advantageously be stored on a server connected to at least one user terminal in one way communication such that the user terminal can communicate to the server the selection information and associated information read from the data storage media.

Preferably, the operator terminal is in at least one way communication with the server such that the selection information and the accumulated quantity information is transmitted to the operator terminal by the server.

With the invention a message is sent to the operator terminal informing it that the user of the identified smart card has ordered particular items. A database at the central server may then be updated to show how many of each type of item have been ordered. Where the system is used in a canteen, for example, this allows the canteen staff to prepare an appropriate number of food items before some set time (e.g. lunch time in a school) so at to reduce waste and maximise customer satisfaction. The user (customer) collects the food at the operator terminal by inserting the smart card into the terminal so that the order is displayed on the screen. The operator is then able to provide the customer with the correct order without having to touch a ticket, cash etc provided by the customer. This improves the hygiene of the process.

Preferably, the central server is linked to one or many user terminals via two-way communication which has the advantage that the menu can be changed and this change can be transmitted to the user terminals immediately.

The user terminals may be located at various positions around a site so that the users can easily make orders.

In a preferred embodiment, the portable data storage medium comprises a smart card which identifies its user and which many optionally include data relating to a monetary amount stored on the card. In this embodiment, the user can select, and pay for items simultaneously at the user terminal. The card may then also be written with data showing which items the user has ordered.

The central server may optionally create a log of all orders made on each smart card. This has the advantage that payment could be effected at a later date by referring to the log and/or information on the items ordered can be obtained. This information can be collated over a week.

In a second embodiment of the invention, the central server is able to communicate with a supplier terminal so as to send orders to the supplier for new supplies. This may be carried out on the basis of the items sold that day so that a substantially constant stock level is achieved. Preferably, this is carried out by having a further database carrying information relating to the constituents of each item so that the amount of each individual constituent that has been expended in a day can be calculated. The correct amount of each constituent to order may then be determined.

In a third embodiment, the central server may be accessible via the internet. This improves access so that, in the case of the system being used in a school canteen for example, parents or other interested parties can make determinations about a particular individual's diet. For example, a parent may rule out some menu items to allow only a restricted choice at the user terminal when their child arrives there. Alternatively, the parent could pre-order the food over the internet so that the child need not visit the user terminal at all and merely presents his smart card at the operator terminal.

A fourth embodiment provides that the system of any of the previous three embodiments may be used in each of several different sites and a master server is provided connected to a central server in each site. This allows the master server to communication with the supplier terminal so as to arrange orders in a centralised fashion.

The present invention also provides a method of ordering, and facilitating the collection of, items, said method comprising:
displaying at a user terminal a menu of available items;
allowing a user to select at least one item;
reading a portable data storage medium;
accumulating selection information so as to calculate the total required quantity of said at least one selected item;
displaying a required quantity of said at least one selected item;
preparing a quantity of said at least one selected item based on said display;
reading said portable data storage medium;
displaying the identity of said at least one selected item in response to the reading of said portable data storage medium.

Other advantages of the present invention, and a fuller appreciation of its construction and mode of operation, will become more apparent from the following detailed description of preferred embodiments which refer to Figures of the accompanying drawings.

### Brief Description of the Drawings

Figure 1 is a schematic view of an ordering system in accordance with a first embodiment of the present invention;
Figure 2 is a schematic view of an system in accordance with a second embodiment of the present invention;
Figure 3 is a schematic view of an ordering system in accordance with a third embodiment of the present invention;
Figure 4 is a schematic view of an ordering system in accordance with a fourth embodiment of the present invention; and
Figure 5 is a flow diagram showing a method according to the present invention.

### Detailed Description of the Preferred Embodiments

The following detailed description relates to a food ordering system for use in a canteen environment e.g. in a school. The invention is not limited thereto however.

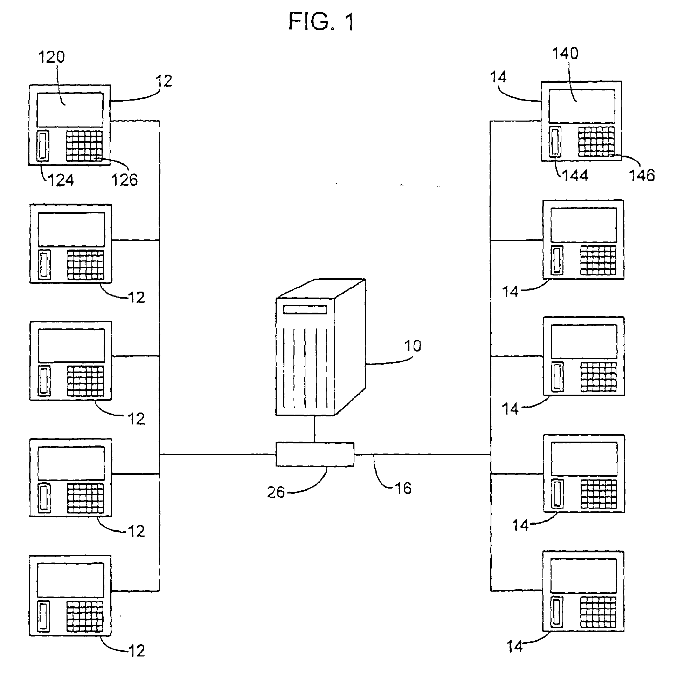

A first embodiment is shown in Figure 1. A central server 10 is provided as a personal computer which has access to at least one database which here is embodied by an appropriate software program on the personal computer. Further, the central server 10 is able to interrogate the database for information and also update it as appropriate. The central server 10 is connected to a plurality of user terminals 12 via appropriate connecting means. In this embodiment a local area network (LAN) 16 together with a switching station (or "hub") 26 is used for this purpose which may use wire or wireless connections. The user terminal 12 has three main components with which the user interacts. These are screen 120, e.g. LCD, for displaying a menu and other transaction related information to the user, a smart card reader 124 in which the user is able to insert a smart card and a key pad 126 in which the user is able to input information into the user terminal 12.

The central server 10 is similarly connected by the LAN 16 to a plurality of operator terminals 14 which are physically located in the canteen area. Each canteen operator (and there may only be one) needs only a single terminal for the invention to operate but it is often more convenient for a plurality of terminals to be used, especially if a plurality of different operators operate in a single canteen. The operator terminals 14 are physically configured in a similar way to the user terminals 12 and have a screen 140, a smart card reader 144 and a key pad 146. There is no necessity for the number of operator terminals to correspond to the number of user terminals.

In this first embodiment, the operator terminals 14 are arranged to send information to the central server 10 as well as receive it therefrom. Further, the user terminals 12 are also connected by a two-way link. However, the invention will still operate satisfactory if the links are one-way such that the user terminal 12 only sends information to the central server 10 and the central server 10 only sends information to the operator terminal 14. In this embodiment using a two-way link, the canteen operator can input at the operator terminal 14 the menu they intend to offer that day or week etc. This menu information is sent to the central server 10 and stored in the database. In turn, the central server 10 sends the menu information to each user terminal 12 so that it may be displayed there. This allows operators to change the menus on a day by day or week by week basis without having physically to go to the user terminals 12 or central server 10 which may be located in a physically remote place to the canteen. Alternatively, the central server 10 may be pre-programmed with a week's worth of menus and may update the user terminals 12 automatically without waiting for instructions from the operator terminals 14.

Preferably, the system is set up so that users can perform transactions such as menu, price and availability enquiries as well as food orders and cancellations.

The user terminals 12 are located at convenient locations around the building, for example in the corridors/classrooms of a school. They may, however, also be located in the canteen itself.

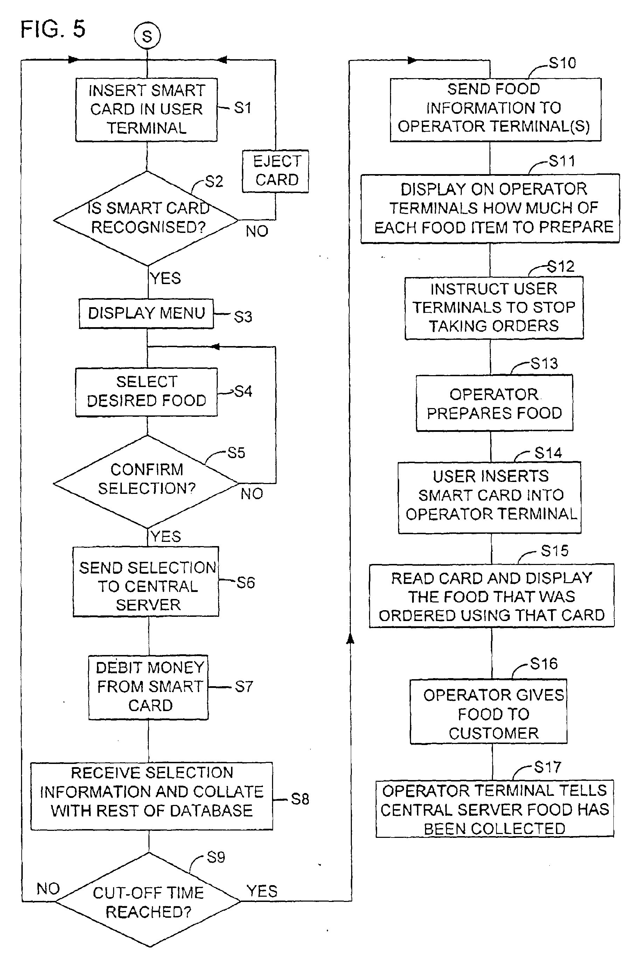

An example of how the apparatus may be operated is now given in the context of a school canteen system and with reference to the flow chart of Figure 5. During the morning a pupil would approach a user terminal 12 and insert a personal smart card into the smart card reader 124 (step S1). The smart card contains data which distinguishes it from the plurality of smart cards held by other users. This data may be thought of as identifying the smart card which in turn identifies the user. Further, the smart card may be loaded with data relating to a monetary value. When this is the case, the smart card can be used to pay for the items purchased. The smart card reader 124 reads the data on the smart card and determines whether it recognises it or not (step S2). The system is able to determine the identity of the user from the smart card. The user is then presented with a menu of available food in step S3. If no special instructions have been given, this menu will be the standard menu for that day. However, if special instructions have been given (see later for how this is done) the menu will be personalised to the user of the smart card. The user terminal 12 can detect whether to personalise the menu by referring to a database on the central server 10 which shows the status of each smart card that is able to use the system. For example, if the database on the central server 10 shows that the particular smart card inserted had a status of "reduced menu" it would inform the user terminal 12 which would restrict the menu options accordingly. Once presented with the menu, the user is required in step S4 to select the desired menu items (hereinafter referred to as "food items"). The term "food items" is intended not to be limiting and embraces drinks and liquid foods such as soup as well as solid food. Once the user has made a selection he is asked to confirm it (step S5) and then the selection is sent to the central server 10 (step S6) along with data read from the smart card. The information sent comprises selection information of at least the identity of the selected food item(s) and the quantity selected thereof. The selection information is associated with data identifying the user so that the system records which food items have been ordered by any particular user. At this point, the correct amount of money is debited in step S7 from the smart card itself. In this connection, other means may be provided to "load" the smart card with data relating to a monetary value but description of such means is omitted here. Alternatively, the money is debited from an account associated with the smart card, or no cash is debited at this stage and instead the transaction is simply logged in the central server 10 so that later payment can be effected.

During the course of the morning a plurality of users will use the various user terminals 12 and will select the food items that are required using the above steps S1-S7. In step S8, these selections are collated by the central server 10 and at some appropriate cut-off time, e.g. one and a half hours before lunch time, the quantity of each food item required is calculated at the central server 10 (step S9). Alternatively, the system could be arranged so that operators can request that the central server sends them the information collated thus far. Thus, it might be possible for the operator to gain some idea of which food items are being ordered even before the designated cut off time. This would most effectively be achieved by the operator keying a command into the operator terminal which causes the operator terminal to request information for the central server. This requires two way communication between the operator terminal and the central server. This information is sent to the operator terminals 14 in step S10 which display it (step S11) so that the canteen operators know how much of each food item they should prepare. This allows minimum wastage and also ensures that desired food items do not run out. At around the same time as instructing the operator terminals (i.e. just after step S11 as shown in Figure 5) in step S12, the central server may optionally inform the user terminals that no more orders are to be taken. The operator then prepares the correct amount of food based on the operator terminal display showing how much of each food item to prepare (step S13).

During lunch time, the food is collected by the students from the operators in the canteen. To do this, the students need to have with them the smart card they used when they placed the order at the user terminals 12. At the operator's stall, the user inserts the smart card into the smart card reader 144 of the operator terminal 14 (step S14). Upon insertion of the card, the operator terminal 14 reads the data stored thereon and verifies with the central server 10 whether the student has placed an order and that they are allowed to collect the food (step S15). If the central server 10 confirms the order it is displayed on the screen 140 so that the operator can provide in step S16 the student with the correct food which has already been prepared. When the food has been collected, the operator or user presses a button on the operator terminal 14 to send a message to the central server 10 that the food has been collected. At this point, data is preferably written to the smart card to indicate that the purchase has been completed. Also preferably, data is written to a log kept in the central server 10 to provide a reference for later use.

In this way, the student is able to order and collect food using a single smart card. There is no need for the operator to handle any currency or even to handle the smart card since the student is able to place it into the operator terminal 14 in the canteen. Further, the central server 10 is able to keep track of all items'ordered and actually collected and this information can be put to later use, for example for monitoring the nutritional value of the food given to the students.

### Embodiment 2

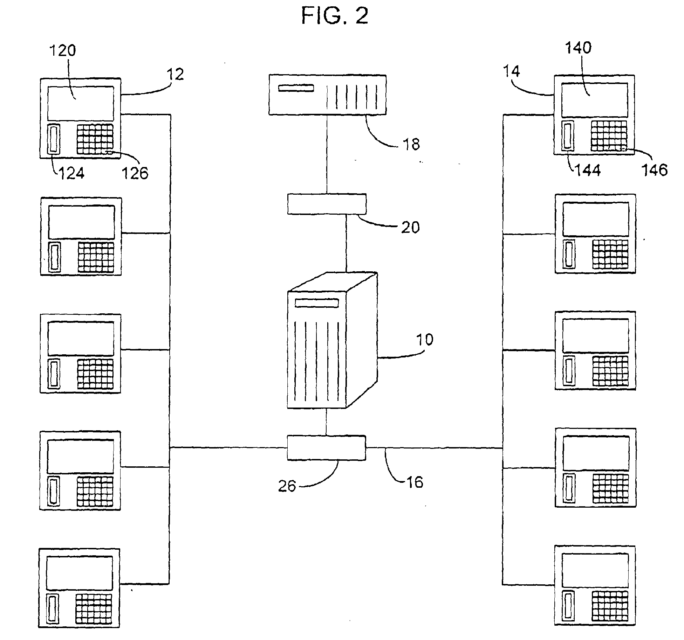

A second embodiment of the invention is shown in Figure 2 of the accompanying drawings. This embodiment has many features in common with Figure 1, in particular the plurality of user terminals 12, the central server 10 and the plurality of operator terminals 14. Description of these features will be omitted for brevity. The second embodiment, however, also includes a modem 20 connected to the central server 10. A supplier terminal 18 is connected to the modem via either a direct line or the telephone system. The supplier terminal 18 may have its own built in modem so as to communicate with the modem 20. This arrangement allows the central server 10 to communicate with the supplier terminal 18. The supplier terminal 18 is located on the premises of a supplier of raw materials to the various stall holders of the canteen. The system is such that it is possible for the central server 10 automatically to place orders with the supplier terminal 18 using the modem 20. At the end of each day, the central server 10 analyses its database and calculates what food items have been distributed to customers. In this way, the central server 10 is able to determine which raw materials used to make the various food items have been depleted during the day. The central server 10 then sends an order (via a dial-up script or e-mail for example) to the supplier terminal 18 so as to obtain supplies to replenish the stores of raw materials. Preferably, the supplier is then able to deliver the food in time for use the next day. In this way, a minimum stock level can be maintained at the canteen premises meaning that less storage space is required, the effects of any damage or theft are ameliorated (by virtue of the fact there is less to be damaged or stolen) and there is less chance of food going off because it has been stored for a lengthy amount of time.

### Embodiment 3

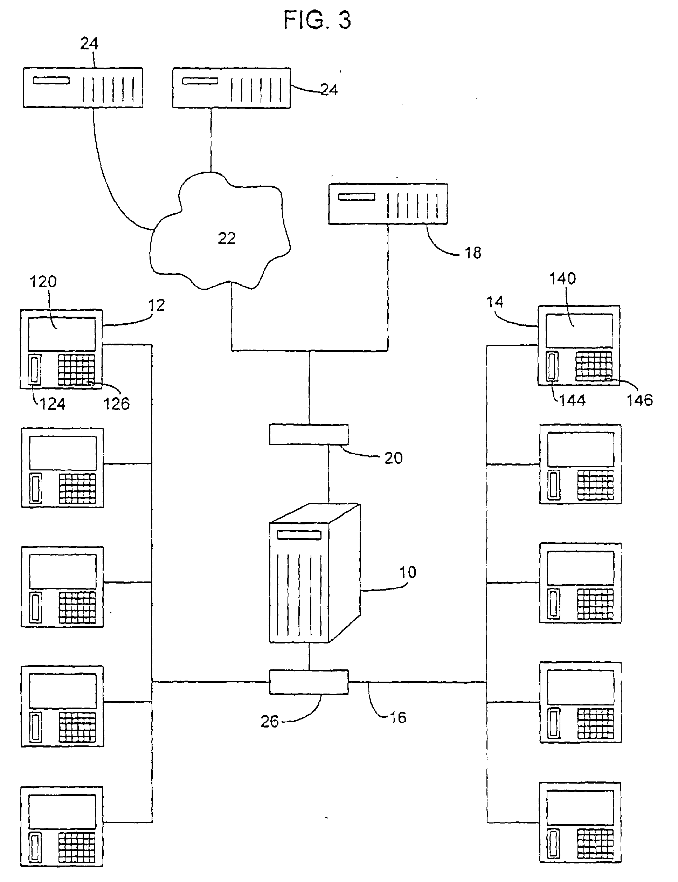

Figure 3 shows a third embodiment of the invention which has many features in common with the embodiment of Figure 2. In addition, this embodiment has a link to the internet 22 by the modem 20 connected to the central server 10. The home computers 24 of student's parents for example are connected to the internet 22. In this way, the student's parents may communicate with the central server 10 via the internet 22. In particular, the central server 10 acts as a web server so as to provide internet pages downloadable by the personal computers 24. These internet pages would allow student's parents to send information to the central server 10 regarding the menu they would like available for their child. For example, they would be allowed to book the food or plan the menu for their child for an entire week or month in advance. If they actually place orders for food over the internet these orders are added to the database for the particular day in question and at the pre-determined cutoff time are included in the central server's calculation of the amount of each food item that is required. This particular embodiment is useful when very young students are involved who may not be competent to order their own food at the user terminals 12. In such cases it is only necessary for the students to present their smart cards at the operator terminals 14 and the central server 10 will be able to recognise which food order applies to them. This whole process is facilitated by the parents keying in a unique code when they make the order over the internet which corresponds to their own child's smart card. Payment may also be effected over the internet using a credit card in the normal way.

Of course the supplier terminal 18 can be connected to the server 10 via the internet, rather than as shown in Figures 2 and 3.

### Embodiment 4

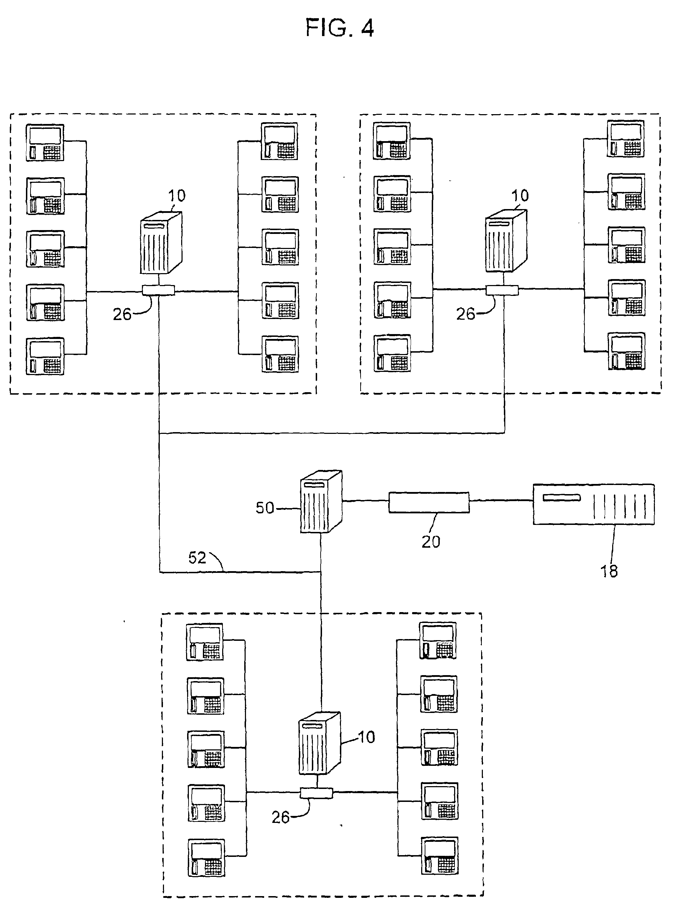

The above three embodiments correspond to the apparatus required for a single school. In a fourth embodiment shown in Figure 4, many schools each having the apparatus, of for example Figure 1, can be connected together in a network (e.g. a wide area network 52). A master server 50 at the centre of this network which is connected to the central server 10 at each school so as to receive messages therefrom. It can then determine what food has been consumed in each of the schools and thus which ingredients need replenishing. This master server 50 can then make an order of ingredients for all of the schools which thus benefit from economies of scale. The connection between each school and the master server may be by a traditional modem link using a telephone line, optionally via the internet, and the information from each school's central server 10 to the master server detailing food used on that day can advantageously be contained in an e-mail message. In both these cases, the master server has a link to the supplier terminal 18 (using a modem 20 similar to the way that the server 10 has a link to the supplier terminal 18 in Figure 2 of the accompanying drawings.)

Although the above preferred embodiments relate to food ordering in a school environment, the invention is not limited thereto. In particular, it will be appreciated that the invention is generally applicable to order and supply of other goods.

## Claims

1. An ordering and collection facilitation system comprising:
a database storing information including an identification of each of a plurality of items available for order and a value corresponding to a respective order therefore;
a plurality of portable data storage media;
at least one user terminal including a viewer for viewing a menu of said items available for order, a selector for selecting at least one of said items to produce selection information, a reader for reading one of said portable data storage media and a data associator for associating the selection information with data read from said portable data storage medium;
a database updator for updating the database with the selection information from said at least one user terminal associated with said data read from the data storage medium, so as to accumulate the selected quantity of each of said items and to store the accumulated quantity in said database;
a display for displaying the accumulated quantity; and
a display operable upon reading data from one of the portable data storage media to display the selection information associated therewith.

2. An ordering and collection facilitation system according to claim 1, wherein said items are food items and said apparatus is for use in a canteen environment.

3. An ordering and collection facilitation system according to claim 1 or 2, wherein said display for displaying the accumulated required quantity is the same as the display for displaying the selection information.

4. An ordering and collection facilitation system according to claim 3, wherein said viewer is the same as said display.

5. An ordering and collection facilitation system according to claim 3, wherein said display is located on an operator terminal, said operator terminal also having a reader for reading one of said data storage media.

6. An ordering and collection facilitation system according to any one of the preceding claims, wherein said database is stored on a server connected to said at least one user terminal, said server being in at least one-way communication with said at least one user terminal and said system being such that said user terminal communicates to said server the selection information and associated information read from said data storage medium.

7. An ordering and collection facilitation system according to claim 6, wherein said operator terminal is in at least one-way communication with said server, the system being such that said selection information and said accumulated quantity are communicated to said operator terminal by said server.

8. An ordering and collection facilitation system according to claim 6 or 7, wherein said at least one user terminal is in two-way communication with said server and said server further includes means for communicating to said at least one user terminal an identification of each of a plurality of items available so that said user terminal can display on the viewer the menu of available items.

9. An ordering and collection facilitation system according to claim 6, wherein said at least one operator terminal is in two-way communication with said server and said operator terminal further includes means for communicating to said server that said at least one selected item has been collected by a user.

10. An ordering and collection facilitation system according to any one of the preceding claims, further comprising means for communicating with a supplier terminal an order for new supplies, said order being based on the items selected by users in a predetermined period of time.

11. An ordering and collection facilitation system according to claim 10 when dependent from claim 6, wherein said order is communicated by said server.

12. An ordering and collection facilitation system according to any one of the preceding claims, wherein said system is connected to the internet to provide downloadable web pages thereto, and is operable to update said database in accordance with items selected by users browsing the web pages, said system being further arranged to accumulate the information it receives via the internet with the information it receives from said at least one user terminal.

13. An ordering and collection facilitation system comprising a plurality of ordering and collection facilitation systems according to any one of the preceding claims each at a different site, all connected to a master server for accumulating information relating to the quantities of said items ordered at said different sites.

14. An ordering and collection facilitation system according to any one of the preceding claims, wherein said selection information comprises the identity and number of the item(s) selected at the user terminal.

15. An ordering and collection facilitation system according to any one of the preceding claims, wherein each of said plurality of portable data storage media contains a unique identifier.

16. An ordering and collection facilitation system according to any one of the preceding claims, wherein each of said portable data storage media contains data relating to an amount of money, said amount being reduced when a user confirms a selection of at least one item at said at least one user terminal.

17. An ordering and collection facilitation system according to any one of the preceding claims, wherein said portable data storage medium is a smart card.

18. A method of ordering, and facilitating the collection of, items, said method comprising:
displaying at a user terminal a menu of available items;
allowing a user to select at least one item;
reading a portable data storage medium;
accumulating selection information so as to calculate the total required quantity of said at least one selected item;
displaying a required quantity of said at least one selected item;
preparing a quantity of said at least one selected item based on said display;
reading said portable data storage medium;
displaying the identity of said at least one selected item in response to the reading of said portable data storage medium.

19. A method according to claim 18 further comprising:
after said first reading step:
transmitting data read from said portable data storage medium and data identifying said at least one selected item to a server and receiving said transmitted data at said server;
after said accumulating step:
transmitting to an operator terminal data identifying said at least one selected food item and the required quantity thereof as well as data read from said portable data storage medium; and
receiving said transmitted data at said operator terminal;
wherein said selection information is collated at said server and said required quantity of said at least one selected item is displayed at said operator terminal.

20. A method according to claim 19, wherein said items are food items.

21. A method according to claim 19 or 20, further comprising:
transmitting data corresponding to an available menu from said server or operator terminal to said user terminal.

22. A method according to claim 19 or 20, further comprising:
transmitting data indicating that the selected item has been collected from said operator terminal to said server.

23. A method according to any one of claims 18 to 22, further comprising:
transmitting data to a supplier terminal, said information being data indicating required supplies of said items, the requirement being based at least in part on the quantity of items selected by the users in a predetermined period of time.

24. A method according to any one of claims 18 to 23, further comprising:
hosting an internet web page displaying said items and receiving data via the internet relating to a choice of items for a particular user.

25. A method according to any one of claims 18 to 24, further comprising:
updating the data on said portable data storage medium so as to have the effect of extracting payment for the selected item from said user.

26. A method according to any one of claims 18 to 25, wherein the step of displaying a required quantity of said at least one selected item is carried out at a selected time after a plurality of users have selected at least one item.
